# DEMANDE DE BREVET EUROPEEN

(11) **EP 0 902 063 A1**
(43) Date de publication de la demande: **17.03.1999**
(21) Numéro de dépôt: 98116711.7
(22) Date de dépôt: 03.09.1998
(51) Int. Cl.: C09D 9/00

(54) **Composition pour le décapage des peintures sur polymère**

(30) Priorité: 11.09.1997 FR 9711323
(71) Demandeur: APPRYL S.N.C., F-92400 Courbevoie (FR); Turco France, 91200 Athis Mons (FR)
(72) Inventeur: Bouveron, Yves, 69126 Brindas (FR); Dehay, Georges, 78800 Houilles (FR); Fresafond, Jean-Pierre, 69530 Brignais (FR); Lottiau, Michel, 27300 Bernay (FR); Trombetta, Francis, 77114 Herme (FR)
(74) Mandataire: Rochet, Michel

(57) **Abrégé**

L'invention concerne une composition comprenant de l'eau, de la potasse, un aminoalcool et un lactame. La composition selon l'invention est adaptée au décapage des revêtements sur polymères, comme par exemple les peintures sur les pare-chocs en polypropylène.

## Description

L'invention concerne une nouvelle composition et son application pour le décapage des peintures.

Pour pouvoir recycler les matières plastiques telles que les polymères ou copolymères du propylène, il est utile, lorsque lesdites matières plastiques ont été revêtues de peinture, d'être capable de la décaper efficacement en début d'un processus de recyclage. En effet, les résidus de peinture au sein de la matière plastique recyclée sont susceptibles de dégrader notablement ses propriétés mécaniques telles que sa résistance aux chocs, son allongement à rupture, sa contrainte à rupture, son module de flexion, et d'être à l'origine de défauts de surface.

La composition de décapage doit de plus faire appel à des ingrédients peu onéreux, faciles à manipuler, posant un minimum de problèmes de sécurité pour le personnel amené à la mettre en oeuvre.

La composition de décapage doit elle-même être facile à recycler et doit décaper le plus rapidement possible. La composition de décapage est de préférence homogène, c est-à-dire monophasique, pour que sa manipulation et son recyclage soit plus aisé. En effet, une composition multiphasique requiert au niveau de son procédé de recyclage une ligne de traitement de recyclage pour chacune des phases séparément. Ceci implique de plus l'usage de moyens de séparation de ces phases.

La composition de décapage doit de préférence être stable au stockage et lors de son utilisation de façon à minimiser les problèmes de mauvaise reproduction de son action décapante.

La composition décapante doit de préférence ne pas comprendre d'abrasif ni d'ingrédient susceptible de diffuser facilement dans le matériau à décaper. En effet, si tel était le cas, un tel ingrédient serait difficile à éliminer dudit matériau et risquerait d'avoir une influence néfaste sur ses propriétés mécaniques après recyclage.

Enfin, la composition décapante est de préférence universelle, c'est-à-dire a une action efficace pour l'ensemble des peintures utilisées sur un type de matériau donné. Une telle universalité permet d'éviter de trier les articles à recycler en fonction de la nature de la peinture appliquée sur lesdits articles.

De nombreuses compositions décapantes ont déjà été proposées. Ces compositions de l'art antérieur font généralement intervenir un alcool très volatil à forte concentration, dont l'usage présente de forts risques d'inflammation. C'est le cas en particulier pour les documents suivants : WO 93 10196, US 3,551,204, US 3,954,648, EP 739701. L'usage d'un tel alcool ne permet pas de chauffer la composition décapante sans prise de risque élevé. Par ailleurs, l'utilisation d'une telle composition à basse température est à l'origine de faibles vitesses de décapage.

La demande de brevet FR 2736000 décrit un procédé de décapage faisant intervenir un agent d'abrasion sous forme de particules. L'usage d'un tel agent solide complique sérieusement le recyclage du milieu de décapage et pose des problèmes de séparation entre ledit agent solide et le substrat décapé.

L'invention permet de résoudre les problèmes sus-mentionnés.

La composition selon l'invention est monophasique, présente une forte activité décapante à température modérée, est stable dans ses conditions d'utilisation, est facile à préparer, fait appel à des ingrédients peu onéreux, faciles à manipuler et présentant une faible tendance à l'inflammabilité, et est universelle au sens où elle est efficace à l'égard de très nombreuses peintures. La composition selon l'invention peut être exempte d'agent d'abrasion sous forme de particules. Après décapage conformément à l'invention, le matériau recyclé présente de fortes propriétés mécaniques, en particulier sur le plan de la résistance aux chocs, de son allongement à rupture, de sa contrainte à rupture, de son module de flexion, et ne présente pas ou peu de défauts de surface.

La composition selon l'invention comprend :
- 1 à 10 % en poids d'eau,
- 1 à 10 % en poids de KOH,
- 15 à 60 % en poids d'un aminoalcool présentant de préférence un point d'ébullition allant de 170°C à 340°C,
- 30 à 90 % en poids d'un lactame.

De préférence, l'aminoalcool est représenté par la formule NR^{¹}R^{²}R^{³} dans laquelle R^{¹}, R^{²} et R^{³}, pouvant être identiques ou différents représentent un radical hydrocarboné linéaire ou ramifié, saturé ou aromatique, ou un radical hydroxyalkyle, l'un au moins des radicaux parmi R^{¹}, R^{²} et R^{³} étant un radical hydroxyalkyle.

Par radical hydroxyalkyle, on entend un radical alkyle substitué par un groupement hydroxyle.

De préférence, tout radical hydroxyalkyle lié à l'atome d'azote de l'aminoalcool comprend un à quatre atomes de carbone, et de manière encore préférée un ou deux atomes de carbone.

De préférence, les radicaux hydrocarbonés liés à l'atome d'azote de l'aminoalcool sont soit des radicaux alkyle comprenant de un à quatre atomes de carbone, soit des radicaux aryle.

L'aminoalcool peut par exemple être le 2-amino-éthanol, le 2,2',2''-nitrilotriéthanol, le 2,2'-iminodiéthanol, le 2-amino-propanol, le monophényldiéthanol.

De préférence, l'aminoalcool est le 2-amino-éthanol. De préférence, le lactame est choisi parmi les N-alkylpyrolidones dans lesquelles le radical alkyle comprend 1 ou 2 atomes de carbone, comme par exemple la N-méthylpyrolidone ou la N-éthylpyrolidone et est de préférence la N-méthylpyrolidone.

L'invention concerne également un procédé de décapage d'un matériau comprenant un substrat comprenant un polymère ou copolymère, et un revêtement ou peinture appliqué sur ledit substrat, comprenant une étape de mise en contact dudit matériau avec la composition selon l'invention. Le procédé selon l'invention permet de séparer le revêtement ou la peinture du substrat, de façon à permettre le recyclage de ce dernier.

L'invention trouve une grande utilité dans le recyclage de pièces thermoplastiques sur lesquelles a été appliqué un revêtement comme par exemple une peinture, et ce dans des secteurs industriels variés, tels que par exemple ceux de l'automobile, de l'audio-vidéo ou de l'électroménager.

La composition selon l'invention est plus particulièrement adaptée au décapage des revêtements et peintures tels que primaires d'adhésion, peintures polyuréthane à deux composantes, vernis acryliques sur des substrats du type thermoplastique telles que les compositions comprenant principalement par exemple une polyoléfine comme le polyéthylène ou le polypropylène, le polychlorure de vinyle, un polyamide comme le polyamide 6 ou 6,6 ou 11 ou 12.

L'invention est tout particulièrement adaptée au décapage des revêtements et peintures appliquées sur les substrats à base de polymère ou copolymère du propylène, c'est-à-dire comprenant plus de 50 % en poids de polymère ou copolymère du propylène. De tels substrats, couramment utilisés, par exemple pour la réalisation de pare-chocs de véhicules automobile, peuvent comprendre d'autres ingrédients que le polymère ou copolymère du propylène, comme par exemple un terpolymère éthylène/propylène/diène (communément appelé EPDM), généralement présent à raison de 5 à 7 % en poids, et/ou une charge minérale, par exemple sous la forme de particules ou de fibres.

En fonction de l'état de propreté du matériau à décaper, on peut être amené à nettoyer celui-ci par tout moyen adapté compte tenu de la nature des corps étrangers à éliminer, préalablement au procédé de décapage selon l'invention. Il est en effet préférable d'éviter d'introduire de tels corps étrangers tels que poussières et/ou graisses dans le bain de décapage selon l'invention, pour ne pas rendre plus difficile son propre recyclage.

Suivant le cas, on pourra donc être amené à nettoyer le matériau à décaper, par exemple par un solvant dégraissant ou une lessive ou tout autre moyen adapté.

Pour la réalisation du procédé de décapage selon l'invention, le matériau à décaper est de préférence découpé en morceaux avant d'être placé dans la composition selon l'invention.

Le décapage peut par exemple être réalisé de sorte que 30 à 200 parties en poids de composition décapante sont mis en contact avec 100 parties en poids de matériau à décaper.

Le décapage est de préférence réalisé entre 30 et 90°C, par exemple de 50 à 85°C, et de préférence sous agitation mécanique. La durée du décapage peut varier en fonction de la température choisie. Pour une température choisie dans la plage préférée, la durée du décapage peut par exemple aller de 10 à 60 minutes. Après décapage par la composition selon l'invention, le matériau à recycler peut être lavé à l'eau puis séché, de préférence entre 60 et 90°C de façon à réduire la teneur en ingrédient de la composition selon l'invention ayant diffusé au sein dudit matériau. Après séchage, le matériau est prêt à être transformé et peut par exemple être broyé en poudre puis transformé en granulés. Ces granulés peuvent servir à la réalisation d'articles selon les techniques habituelles de transformation des matières plastiques comme par exemple l'injection.

### EXEMPLES 1 A 5

L'exemple 2 illustre l'invention. Les exemples 1, 3, 4 et 5 sont comparatifs.

Dans un becher de 250 ml, on place du 2-amino-éthanol, puis de la N-méthylpyrolidone, puis de la potasse en pastille, on agite par un barreau magnétique jusqu'à dissolution complète de la potasse. On ajoute ensuite de l'eau toujours sous agitation. Après cette opération, les ingrédients sont présents conformément aux compositions décrites dans le tableau 1.

On laisse refroidir pour observer une éventuelle démixion du mélange.

Le tableau 1 indique en fonction de la composition si une telle démixion a été observée (une ou deux phases suivant le cas). On chauffe alors la composition sous agitation à 70°C. On arrête l'agitation. On place ensuite dans le bain de décapage des éprouvettes à décaper de dimension : 25 mm x 210 mm x 3 mm. Ces éprouvettes ont été découpées à partir d'un pare-chocs en polypropylène revêtu d'une peinture tricouche, la première, en contact avec le polypropylène, étant en cire de polyéthylène chloré, appliquée après flammage, la seconde étant en polyuréthane pigmenté en blanc par de l'oxyde de titane, la troisième étant un vernis polyacrylique.

On laisse agir 20 minutes. On rince ensuite l'éprouvette sous un jet d'eau de 2 bars pendant 30 secondes et l'on constate visuellement si le décapage a été total ou seulement partiel. Le tableau 1 rassemble les résultats.

### EXEMPLE 6

Dans un panier parallélépipédique constitué à partir d'un grillage en polypropylène, de dimension 150 mm x 150 mm x 200 mm, on place 1 kg de morceaux de pare choc de même nature que celui utilisé pour les exemples précédents, lesdits morceaux ayant une taille moyenne d'environ 80 mm x 50 mm x 3 mm.

On place ce panier dans une cuve parallélépipédique en inox de dimension 300 mm x 300 mm x 250 mm, contenant 25 l de la composition de l'exemple 2, préalablement chauffé à 80°C. Le panier trempe entièrement dans le liquide.

Le panier est mis en rotation à une vitesse d'environ 4 à 5 révolutions par minute. Au bout de 20 minutes, le panier est sorti de la cuve et soumis à un jet d'eau de 2 bars.

On constate par observation visuelle que les éprouvettes sont totalement décapées. Les éprouvettes sont laissées à l'air ambiant pour être séchées naturellement.

Le polypropylène décapé est alors broyé et placé en étuve 2 heures à 120°C sous un vide à la pression résiduelle de 200 millibars. On constate que ce traitement en étuve a fait perdre 0,5 % de poids au polypropylène, ce qui correspond à la quantité d'ingrédients de la composition que le traitement de décapage a fait rentrer dans le polypropylène.

### EXEMPLE 7

On recycle conformément à l'exemple 3, 15 kg de polypropylène revêtu de la même peinture que pour les exemples précédents. Comme pour l'exemple 3, le polypropylène décapé est broyé et placé en étuve 2 heures à 120°C sous un vide à la pression résiduelle de 200 millibars. On mélange à sec à la poudre de polypropylène ainsi obtenu des antioxydants de marque IRGANOX B 225 et IRGANOX PS 302, commercialisés tous deux par CIBA-GEIGY à raison de 0,2 % en poids de chacun de ces deux composés dans le mélange final.

Ce mélange est ensuite malaxé à 210°C dans un malaxeur BUSS PR46/7015D pour être transformé en granulés. Ceux-ci sont injectés sur une presse KRAUSS MAFFEI B2 à 230°C pour la réalisation des éprouvettes nécessaires aux évaluations des propriétés mécaniques. Le tableau 2 rassemble les résultats.

### EXEMPLE 8 (COMPARATIF)

On procède comme pour l'exemple 4, sauf que l'on utilise un pare-chocs de même nature mais non peint et n'ayant de ce fait pas subi de traitement de recyclage.

Le tableau 2 rassemble les résultats.

### EXEMPLE 9

On procède comme pour l'exemple 6, sauf que l'on utilise un mélange de morceaux de pare-chocs en polypropylène comprenant environ 6 % de terpolymère éthylène/propylène/diène, revêtus de peintures différentes, à partir d'un échantillon représentatif des différents pare-chocs montés sur des véhicules automobile dans les années 1983 à 1996.

On observe que toutes les peintures ont été totalement décapées.

**TABLEAU 1**

| **EXEMPLE N°** | **1** | **2** | **3** | **4** | **5** |
|---|---|---|---|---|---|
| N-méthyl pyrolidone (% poids) | 42 | 60 | 50 | 54 | 70 |
| Monoétanolamine (% poids) | 16 | 30 | 25 | 27 | 0 |
| eau (% poids) | 16 | 5 | 12,5 | 9,5 | 15 |
| KOH (% poids) | 26 | 5 | 12,5 | 9,5 | 15 |
| **NOMBRE DE PHASES** | 2 | 1 | 2 | 2 | 2 |
| **EFFICACITE DU DECAPAGE** | partiel | total | - | - | - |

**TABLEAU 2**

| **EXEMPLE N°** | **Module de flexion ISO 178 (MPA)** | **Contrainte à rupture en traction ISO R 527 (MPA)** | **Résistance aux chocs IZ0D entaillé à 23°C ISO 180 (KJ/m**^{**2**}**)** | **Résistance aux chocs IZOD entaillé à -20°C ISO 180 (KJ/m**^{**2**}**)** |
|---|---|---|---|---|
| 7 | 793 | 16 | 50 | 7 |
| 8 (comparatif) | 778 | 14,3 | 50,5 | 7,6 |

## Revendications

1. Composition comprenant :
- 1 à 10 % en poids d'eau,
- 1 à 10 % en poids de KOH
- 15 à 60 % en poids d'un aminoalcool
- 30 à 90 % en poids d'un lactame.

2. Composition selon la revendication 1 caractérisée en ce que l'aminoalcool présente un point d'ébullition allant de 170 à 340°C.

3. Composition selon la revendication 1 ou 2 caractérisée en ce que l'aminoalcool est représenté par la formule NR^{¹}R^{²}R^{³} dans laquelle R^{¹}, R^{²} et R^{³}, pouvant être identiques ou différents, représentent un radical hydrocarboné linéaire ou ramifié, saturé ou aromatique, ou un radical hydroxyalkyle, l'un au moins des radicaux parmi R^{¹}, R^{²} et R^{³} étant un radical hydroxyallkyle.

4. Composition selon la revendication 3 caractérisée en ce que tout radical hydroxyalkyle lié à l'atome d'azote de l'aminoalcool comprend un à quatre atomes de carbone.

5. Composition selon la revendication 4 caractérisée en ce que tout radical hydroxyalkyle lié à l'atome d'azote de l'aminoalcool comprend un ou deux atomes de carbone.

6. Composition selon la revendication 5 caractérisée en ce que l'aminoalcool est le 2-amino-éthanol.

7. Composition selon l'une des revendications 1 à 6 caractérisée en que ce que lactame est une N-alkylpyrolidone.

8. Composition selon la revendication 7 caractérisée en ce que le radical alkyle de la N-alkylpyrolidone comprend 1 ou 2 atomes de carbone.

9. Composition selon la revendication 8 caractérisée en ce que la N-alkylpyrolidone est la N-méthylpyrolidone.

10. Composition selon l'une des revendications 1 à 9 caractérisée en ce qu'elle est exempte d'agent d'abrasion sous la forme de particules.

11. Procédé de décapage d'un matériau comprenant un substrat comprenant un polymère ou copolymère, et un revêtement ou peinture appliqué sur ledit substrat, comprenant une étape de mise en contact du matériau avec la composition de l'une des revendications 1 à 10.

12. Procédé selon la revendication 11 caractérisé en ce que le substrat est thermoplastique.

13. Procédé selon la revendication 12 caractérisé en ce que le substrat comprend plus de 50 % en poids de polymère ou copolymère du propylène.

14. Procédé selon l'une des revendications 11 à 13 caractérisé en ce que la mise en contact est réalisée entre 30 et 90°C.

15. Procédé selon la revendication précédente caractérisé en ce que la mise en contact est réalisée entre 50 et 85°C.

16. Procédé selon l'une des revendications 11 à 15 caractérisé en ce que la mise en contact est réalisée sous agitation mécanique.

17. Procédé selon l'une des revendications 11 à 16 caractérisé en ce que le matériau est issu d'un pare-chocs d'automobile.

18. Procédé selon l'une des revendications 11 à 17 caractérisé en ce que 30 à 200 parties en poids de composition sont mis en contact avec 100 parties en poids de matériau.
